# EUROPEAN PATENT APPLICATION

(11) **EP 2 088 348 A1**
(43) Date of publication of application: **12.08.2009**
(21) Application number: 06843741.7
(22) Date of filing: 27.12.2006
(51) Int. Cl.: F16F 9/12

(54) **ROTATION DAMPER**

(30) Priority: 31.10.2006 WO PCT/JP2006/322217
(71) Applicant: Nifco INC., Yokohama-shi, Kanagawa 244-8522 (JP)
(72) Inventor: YAMAGUCHI, Keiji, Yokohama-shi Kanagawa 244-8522 (JP); JINBO, Naoto, Yokohama-shi Kanagawa 244-8522 (JP); TOMITA, Shigemitsu, Yokohama-shi Kanagawa 244-8522 (JP); OKABAYASHI, Syunsuke, Yokohama-shi Kanagawa 244-8522 (JP); KITAKAWA, Ayako, Yokohama-shi Kanagawa 244-8522 (JP); TOU, Bunkin, Yokohama-shi Kanagawa 244-8522 (JP); HIRANO, Yuki, Yokohama-shi Kanagawa 244-8522 (JP); KOIZUMI, Kazuyoshi, Yokohama-shi Kanagawa 244-8522 (JP); TAKEI, Yoshihisa, Yokohama-shi Kanagawa 244-8522 (JP)
(74) Representative: Gassner, Wolfgang
(86) International application number: PCT/JP2006/326370
(87) International publication number: WO 2008/053574

(57) **Abstract**

A rotary damper is provided so that air incorporated into a housing during assembly is not excessively compressed, whereby a generation of a peculiar sound due to the air incorporated into the housing can be prevented even though the rotor rotates in both directions, and so that the air is stopped and captured in a fixed place whereby influence on the generated torque can be reduced, and irregularity of the torque can be reduced progressively.

A rotary damper includes a housing (11, 51), silicon oil housed inside the housing (11, 51), a rotor 31 housed inside the housing (11, 51), and having a shaft member (32) projecting from the housing (11, 51) and having a resistance member (36) moving through the silicon oil (21) inside the housing (11, 51), and an 0-ring (61) for preventing leakage of the silicon oil (21) from between the shaft member (32) and the housing (51). A circumferential groove (54) is provided on an inner face of the housing (51) facing the resistance member (36).

## Description

### Technological Field

This invention relates to a rotary damper, for example, for damping the rotation of a driving gear which engages with a gear or a rack.

### Background Art

The above-mentioned rotary damper comprises a housing, a viscous fluid enclosed in this housing, a rotor provided inside the housing and having a resistance member, which moves through the viscous fluid inside the housing, provided on a shaft member partially protruding out from the housing, and seal member for preventing leakage of the viscous fluid from between the shaft member of the rotor and the housing.

Furthermore, a driving gear is attached on the shaft member projecting out from the housing (for example, Japanese Patent Publication No. H4-34015).

### Disclosure of the Invention

In the conventional rotary damper, the shape of the resistance member is made roughly oval so that air incorporated into the housing during assembly is not allowed to be positioned between the resistance member as the torque generation part and the bottom face or the top face inside the housing.

However, because the rotor rotates in both directions, a peculiar sound is generated when the air incorporated into the housing crosses over the resistance member and moves to the opposite side of the resistance member.

The peculiar sound generated when the air crossing over the resistance member is believed to be a burst noise caused by the air incorporated into the housing being compressed by crossing over the resistance member and then suddenly being released when having crossed over the resistance member.

Furthermore, this peculiar sound tends to occur more easily as the viscosity of the viscous fluid is higher, and also it tends to occur more easily as the gap between the rotor and the housing is narrower.

Also, if the position of the air inside the housing is not fixed, a stable torque cannot be obtained, and irregularity is caused in the torque.

This invention has been created in order to eliminate inconveniences as mentioned above, and it is to provide a rotary damper in which it is made such that air incorporated into the housing during assembly is not excessively compressed, whereby the generation of a peculiar sound due to the air incorporated into the housing can be prevented even though the rotor rotates in both directions, and the air is stopped and captured in a fixed place whereby the influence on the generated torque can be reduced, and irregularity of the torque can be reduced to the extent possible.

The present invention is as follows.
(1) In a rotary damper comprising a housing, a viscous fluid housed inside this housing, and a rotor provided inside said housing and having a resistance member, which moves through said viscous fluid inside the housing, provided on an output member partially exposed to the outside of said housing, an air stopping member is provided on the inner face of said housing or on said resistance member.
(2) In the rotary damper recited in (1), wherein said air stopping member is provided on the inner face positioned on the upper side of said housing in the attached condition.
(3) In the rotary damper recited in (1) or (2), wherein said air stopping member comprises a plurality of divided air stopping members positioned on the circumference, and said divided air stopping members adjacent to each other in the circumferential direction are connected by a passage for air movement.
(4) In the rotary damper recited in (1) or (2), wherein the air stopping member of said housing is provided so as not to face said resistance member.
(5) In the rotary damper recited in (1) or (2), wherein there is provided a spacer which partitions between the air stopping member of said housing and said resistance member.
(6) In the rotary damper recited in (1) or (2), wherein the air stopping member of said housing is provided in a portion other than a portion corresponding to a vicinity of an outermost periphery part of said resistance member.
(7) In the rotary damper recited in (3), wherein said plurality of divided air stopping members of said resistance member comprises pass-through holes, and said passages for air movement which connect said pass-through holes comprise recessed grooves provided on said housing.
(8) In the rotary damper recited in (7), wherein said pass-through holes are provided concentrically, and said recessed grooves are circumferential grooves provided on said housing corresponding to said pass-through holes.

According to this invention, because an air stopping member is provided on the inner face of the housing or on the resistance member, the air incorporated into the housing during assembly can be stopped in this air stopping member.

Accordingly, even though the rotor rotates in both directions, the air incorporated into the housing during assembly moves inside the air stopping member in a state being not excessively compressed, and therefore the generation of a peculiar sound due to the air incorporated into the housing can be prevented.

Furthermore, because the air is captured in a fixed place, the influence on the generated torque can be reduced, and irregularity of the torque can be reduced to the extent possible.

Also, because the air stopping member is provided on the inner face positioned on the upper side of the housing in the attached condition, the air incorporated into the housing during assembly can be stopped surely, and therefore the generation of a peculiar sound due to the air incorporated into the housing can be prevented surely.

Furthermore, because the air stopping member includes the plurality of divided air stopping members positioned on the circumference, and the divided air stopping members adjacent to each other in the circumferential direction are connected by a passage for air movement, the air incorporated into the housing during assembly can move from one divided air stopping member to another divided air stopping member via the passage for air movement in a state being not excessively compressed.

Accordingly, even though the rotor rotates in both directions, because the air stopped in the divided air stopping members moves from one divided air stopping member to another divided air stopping member via the passage for air movement in a state being not excessively compressed, the generation of a peculiar sound due to the air incorporated into the housing can be prevented.

Also, because the air stopping member of the housing is provided in a place that does not face the resistance member, the influence on the torque generated at the resistance member can be reduced.

Also, because there is provided a spacer which partitions between the air stopping member of the housing and the resistance member, irregularity of the generated torque can be reduced by partitioning the air in the air stopping member from the resistance member by the spacer.

Also, in a rotary damper having a viscous fluid inside a housing, because the generated torque also becomes greater as the rotational speed becomes faster, the main torque is generated in the vicinity of the outermost periphery of the resistance member, therefore, by providing the air stopping member of the housing in a portion other than a portion corresponding to the vicinity of the outermost periphery of the resistance member, the influence on the generated torque can be suppressed.

Also, because the plurality of divided air stopping members in the resistance member serves as pass-through holes, and the passages for air movement which connect the pass-through holes serve as recessed grooves provided on the housing, the air incorporated into the housing during assembly can move from one pass-through hole to another pass-through hole via the recessed groove in a state being not excessively compressed.

Accordingly, even though the rotor rotates in both directions, because the air stopped in the pass-through hole moves from one pass-through hole to another pass-through hole via the recessed groove in a state being not excessively compressed, the generation of a peculiar sound due to the air incorporated into the housing can be prevented.

Furthermore, because the pass-through holes are provided concentrically, and the recessed grooves are circumferential grooves provided on the housing corresponding to the pass-through holes, the air incorporated into the housing during assembly can be made to move from one pass-through hole to another pass-through hole in a state further being not compressed, whereby a peculiar sound due to the air incorporated into the housing can be further prevented.

### Brief Description of the Drawings

Fig. 1 is an exploded perspective view showing the rotary damper of the first embodiment of the invention.
Fig. 2 is an enlarged sectional view of the left half of the case shown in Fig. 1.
Fig. 3 is a plan view of the rotor shown in Fig. 1.
Fig. 4 is a front view of the rotor shown in Fig. 1.
Fig. 5 is a bottom view of the rotor shown in Fig. 1.
Fig. 6 is a sectional view along the A-A line in Fig. 3.
Fig. 7 is an enlarged sectional view of the left half of the cap shown in Fig. 1.
Fig. 8 is a drawing for explaining the process of assembling the rotary damper shown in Fig. 1.
Fig. 9 is a sectional view showing the rotary damper of the first embodiment of this invention.
Fig. 10 is an exploded perspective view showing the rotary damper of the second embodiment of the invention.
Fig. 11 is an exploded perspective view showing the rotary damper of the third embodiment of the invention.
Fig. 12 is an exploded perspective view showing the rotary damper of the fourth embodiment of the invention.
Fig. 13 is an exploded perspective view showing the rotary damper of the fifth embodiment of the invention.
Fig. 14 is a sectional view showing the rotary damper of the sixth embodiment of this invention.
Fig. 15 is a sectional view showing the rotary damper of the seventh embodiment of this invention.
Fig. 16 is an exploded perspective view showing the rotary damper of the eighth embodiment of this invention.
Fig. 17 is an exploded perspective view showing the rotary damper of the ninth embodiment of this invention.
Fig. 18 is a sectional view showing the rotary damper of the ninth embodiment of this invention.
Fig. 19 is a sectional view showing the rotary damper of the tenth embodiment of this invention.
Fig. 20 is partial sectional view showing the rotary damper of the eleventh embodiment of this invention.
Fig. 21 is an exploded perspective view showing the rotary damper of the twelfth embodiment of this invention.
Fig. 22 is an exploded perspective view showing the rotary damper of the thirteenth embodiment of this invention.
Fig. 23 is an exploded perspective view showing the rotary damper of the fourteenth embodiment of this invention.
Fig. 24 is an exploded perspective view showing the rotary damper of the fifteenth embodiment of this invention.
Fig. 25 is a drawing for explaining the process of assembling the rotary damper shown in Fig. 24.
Fig. 26 is a sectional view showing the rotary damper of the fifteenth embodiment of this invention.
Fig. 27 is a sectional view showing a rotary damper to which this invention can be applied.
Fig. 28 is a sectional view showing another rotary damper to which this invention can be applied.

### Best Modes for Carrying out the Invention

Embodiments of the invention are explained below based on the drawings.

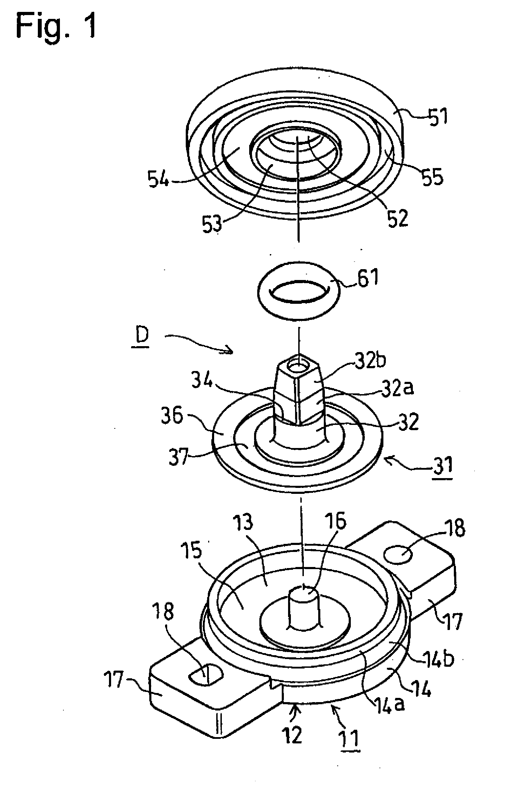

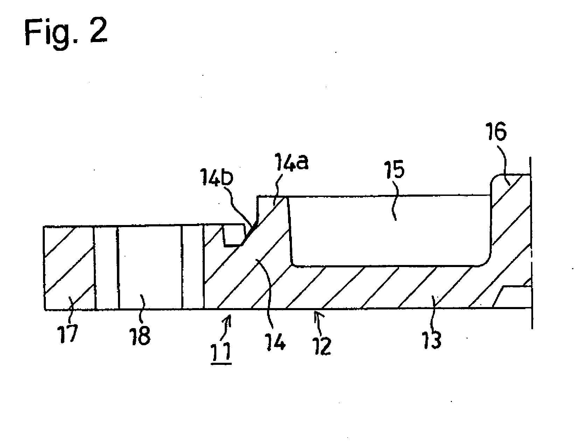

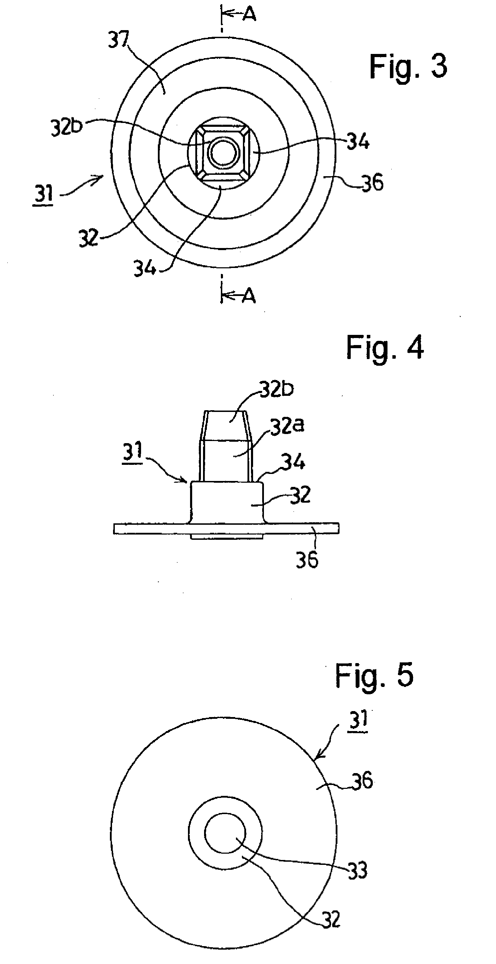

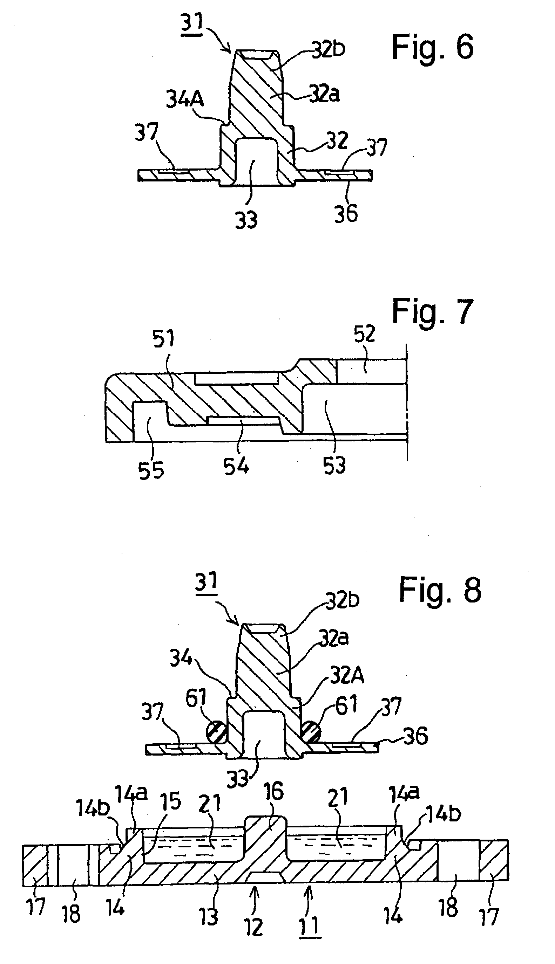

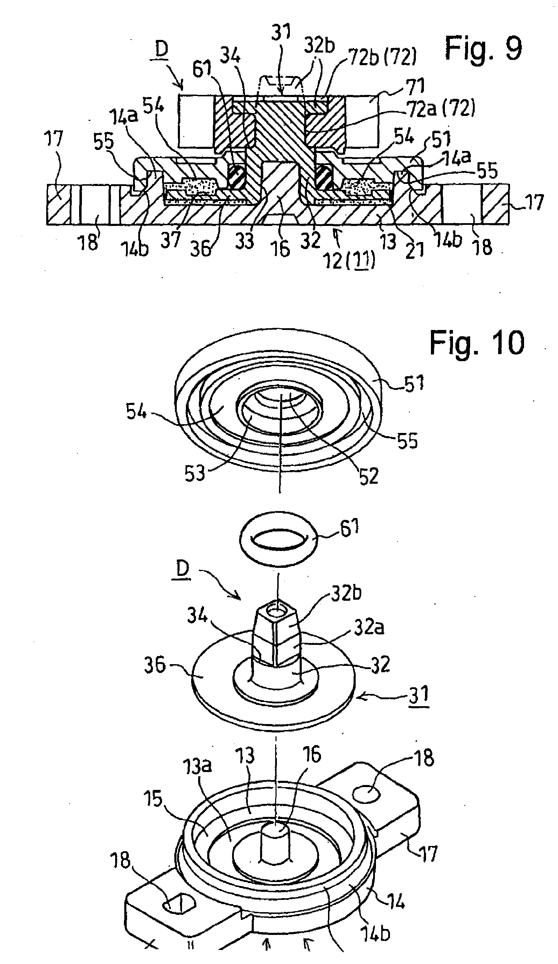

Fig. 1 is an exploded perspective view showing the rotary damper of the first embodiment of this invention, Fig. 2 is an enlarged sectional view of the left half of the case shown in Fig. 1, Fig. 3 is a plan view of the rotor shown in Fig. 1, Fig. 4 is a front view of the rotor shown in Fig. 1, Fig. 5 is a bottom view of the rotor shown in Fig. 1, Fig. 6 is a sectional view along the A-A line in Fig. 3, Fig. 7 is an enlarged sectional view of the left half of the cap shown in Fig. 1, Fig. 8 is a drawing for explaining the process of assembling the rotary damper shown in Fig. 1, and Fig. 9 is a sectional view showing the rotary damper of the first embodiment of this invention.

In Fig. 1, D indicates a rotary damper, the rotary damper comprising: a case 11 made of synthetic resin, silicon oil 21 (see Fig. 8 or Fig. 9) as a viscous fluid provided inside the case 11, a rotor 31 made of synthetic resin provided inside the case 11 and having a resistance member 36, which moves through the silicon oil 21 in the case 11, provided on a shaft member 32 as an output member partially protruding to the outside from the case 11, a cap 51 made of synthetic resin for closing the opening of the case 11, having a pass-through hole 52 through which the shaft member 32 of this rotor 31 passes, an 0-ring 61 as a seal member for preventing leakage of the silicon oil 21 from between this cap 51 and the shaft member 32 of the rotor 31, and a driving gear 71 (see Fig. 9) made of synthetic resin attached to the shaft member 32 of the rotor 31 projecting from the cap 51.

The housing comprises the case 11 and the cap 51.

The above-mentioned case 11 comprises: a case main body 12 having a cylindrical wall part 14 encircling the outside edge of a bottom part 13 which is circular in planar shape, a round-columnar shaft bearing part 16 provided in the center of the bottom face on the inside of the bottom part 13, and attachment flanges 17 having attachment holes 18, provided in the radial direction, for example, at a 180° interval, on the outer periphery of the case body 12.

Also, on the upper side of the cylindrical wall part 14, there is provided an encircling thin protruding cylindrical part 14a having the face extending the inner periphery face of the cylindrical wall part 14 as its inner periphery face.

Also, on the boundary part on the outside of this thin protruding cylindrical part 14a with the cylindrical wall part 14, as shown in Figs. 2 and 9, there is provided an inclined part 14b opening from the inside to the outside toward the side of the bottom part 13, for welding the outer periphery part of the cap 51.

Also, 15 indicates a housing part formed inside the case main body 12, it is the part for housing the silicon oil 21 (see Fig. 8 or Fig. 9), and it corresponds to the part surrounded by the lower side of the thin protruding cylindrical part 14a and the cylindrical wall part 14, or the cylindrical wall part 14.

The above-mentioned rotor 31, as shown in Figs. 1, 3-6, and 9, comprises: a round columnar shaft member 32, and a flat plate-shaped resistance member 36 having a circular shape viewed as a plane connected to this shaft member 32.

Also, on the shaft member 32, a circular-shaped concavity 33 (see Fig. 5 or Fig. 6) to which the shaft bearing part 16 of the case 11 couples to be capable of rotation is provided on the bottom face, and it has a step part 34 on the part protruding out from the cap 51 (see Fig. 9).

The part of the shaft member 32 on the upper side from this step part 34 has a shape in which on the upper side of a square column 32a concentric with the shaft member 32 on the lower side, concentrically with the shaft member 32 on the lower side, there is connected a square pyramidal portion 32b having an inclined face continuing on the periphery face of the square column 32a.

Also, on the part on the upper side of the resistance member 36, an encircling groove 37 is provided on a concentric circle centered on the center of the shaft member 32 as a passage for air movement.

Also, a circumferential groove 54 encircling the cap 51 is provided the encircling groove 37, and serves as an air stopping member in this embodiment, as described later.

On the above-mentioned cap 51, as shown in Figs. 1, 7, and 9, there is provided in the center a pass-through hole 52 through which the shaft member 32 of the rotor 31 passes, and on the lower side of this pass-through hole 52, there is provided a ring-shape step part 53 for receiving the 0-ring 61, being cut out cylindrically to reach to the lower end, and on the outside of the ring-shape step part 53 on the lower side, there is provided as an air stopping member a circumferential groove 54 corresponding to the encircling groove 37 and having a wider width than the encircling groove 37, on a concentric circle centered on the center of the shaft member 32 as an air stopping member, and furthermore, on the outside edge on the lower side, there is provided an encircling coupling recessed groove 55 with which the thin protruding cylindrical part 14a of the case main body 12 couples.

The above-mentioned driving gear 71, as shown in Fig. 9, is provided in the center with an attachment hole 72 on the upper side of a square hole 72a through which the upper side of the shaft member 32 of the rotor 31 passes and is connected a ring-shape step part 72b concentric with this hole 72a.

Next, one example of assembly of the rotary damper D is explained.

First, as shown in Fig. 8, the upper side of the shaft member 32 of the rotor 31 is fitted into the 0-ring 61, a suitable quantity of silicon oil 21 is poured into the housing part 15, and the lower side of the shaft member 32 and the resistance member 36 are housed inside the housing part 15 so as to cause the shaft bearing part 16 of the case 11 to couple inside the concavity 33.

Also, it may be that silicon oil 21 is applied to the concavity 33 and the lower side (lower face) of the resistance member 36, then a suitable quantity of silicon oil 21 is poured inside the housing part 15, and the lower side of the shaft member 32 and the resistance member 36 are housed inside the housing part 15 so as to cause the shaft bearing part 16 of the case 11 to couple inside the concavity 33.

In this case, because air no longer stops inside the concavity 33 of the rotor 31, the air remaining inside the housing can be reduced.

Also, while inserting the shaft member 32 into the pass-through hole 52, the thin protruding cylindrical part 14a is made to couple inside the coupling recessed groove 55 of the cap 51, and the opening of the case 11 is closed by the cap 51.

Thus when the opening of the case 11 is closed by the cap 51, the silicon oil 21 positioned in the vicinity of the 0-ring 61 is pressed by the inner face of the cap 51, and it gradually moves toward the outside in the radial direction, and therefore the air inside the housing part 15 is pressed out from between the cap 51 and the opening of the case 11 by the silicon oil 21, and the air remaining inside the housing becomes less, and in that state, the cylindrical part of the outer periphery edge forming the coupling recessed groove 55 of the cap 51 contacts with the inclined part 14b, and the upper end of the thin protruding cylindrical part 14a and the bottom of the coupling recessed groove 55 face each other with a slight gap in between.

In this state, the cap 51 is pushed with a prescribed pushing force toward the case main body 12 and the cylindrical part of the outer periphery edge forming the coupling recessed groove 55 and the inclined part 14b are sealed, for example, while welding around in a circle by high-frequency welding, and the bottom of the coupling recessed groove 55 is made to contact with the upper end of the thin protruding cylindrical part 14a.

Thus when the cap 51 is welded to the case 11, the air inside the thin protruding cylindrical part 14a is substantially exhausted to the outside of the case 11, and the thin protruding cylindrical part 14a and the cap 51 are adhered closely, and in addition, the 0-ring 61 is housed inside the ring-shape step part 53, and the 0-ring 61 prevents leakage of the silicon oil 21 from between the shaft member 32 and the cap 51.

Also, the shaft member 32 projecting out from the cap 51 is made to couple inside the attachment hole 72 of the driving gear 71, and then the upper side part of the square pyramidal portion 32b is heated and deformed so as to spread inside the ring-shape step part 72b, whereby, as shown in Fig. 9, the assembly of the rotary damper D is finished.

By this embodiment, because a circumferential groove 54 is provided on the inner face of the cap 51 constituting the housing facing the resistance member 36, the air incorporated into the housing during assembly can be stopped in this circumferential groove 54.

Accordingly, even though the rotor 31 rotates in both directions, the air stopped in the circumferential groove 54 moves inside the circumferential groove 54 in a state being not excessively compressed, and therefore the generation of a peculiar sound due to the air incorporated into the housing can be prevented.

Also, when the rotary damper D is attached with the side of the cap 51 up, because the circumferential groove 54 is provided on the inner face of the cap 51 positioned on the upper side, the air incorporated into the housing during assembly can be stopped assuredly in the circumferential groove 54, and therefore the generation of a peculiar sound due to the air incorporated into the housing can be prevented assuredly.

Also, because the encircling groove 37 facing the circumferential groove 54 is provided on the resistance member 36, the air can be stopped also in this encircling groove 37, and therefore even in the case when more air than the expected quantity of air is incorporated into the housing during assembly, the generation of a peculiar sound due to the air incorporated into the housing can be prevented assuredly.

Furthermore, it becomes that the air does not move to the outside of the circumferential groove 54 and the encircling groove 37, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

Fig. 10 is an exploded perspective view showing the rotary damper of the second embodiment of this invention, the same symbols are assigned to the same or similar parts as in Figs. 1-9, and the explanation is omitted.

Also, the parts omitted in illustration are constituted in the same manner as in the first embodiment.

In Fig. 10, on the inside bottom face of the bottom part 13, a circumferential groove 13a is provided on a concentric circle centered on the center of the shaft bearing part 16 as an air stopping member.

Also, because the method of assembly of the rotary damper D is the same as the first embodiment, the explanation is omitted.

By this embodiment, because a circumferential groove 13a is provided on the inner face of the bottom part 13 of the case 11 constituting the housing facing the resistance member 36, and a circumferential groove 54 is provided on the inner face of the cap 51 constituting the housing facing the resistance member 36, the air incorporated into the housing during assembly can be stopped in these circumferential grooves 13a, 54.

Accordingly, even though the rotor 31 rotates in both directions, the air stopped in the circumferential grooves 13a, 54 moves inside the circumferential grooves 13a, 54 in a state being not excessively compressed, and therefore the generation of a peculiar sound due to the air incorporated into the housing can be prevented.

Also, when the rotary damper D is attached with the side of the cap 51 up, because the circumferential groove 54 is provided on the inner face of the cap 51 positioned on the upper side, the air incorporated into the housing during assembly can be stopped assuredly in the circumferential groove 54, and therefore the generation of a peculiar sound due to the air incorporated into the housing can be prevented assuredly.

Also, when the rotary damper D is attached with the side of the case 11 up, because the circumferential groove 13a is provided on the inner face of the bottom part 13 positioned on the upper side, the air incorporated into the housing during assembly can be stopped assuredly in the circumferential groove 13a, and therefore the generation of a peculiar sound due to the air incorporated into the housing can be prevented assuredly.

Furthermore, it becomes that the air does not move to the outside of the circumferential grooves 13a, 54, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

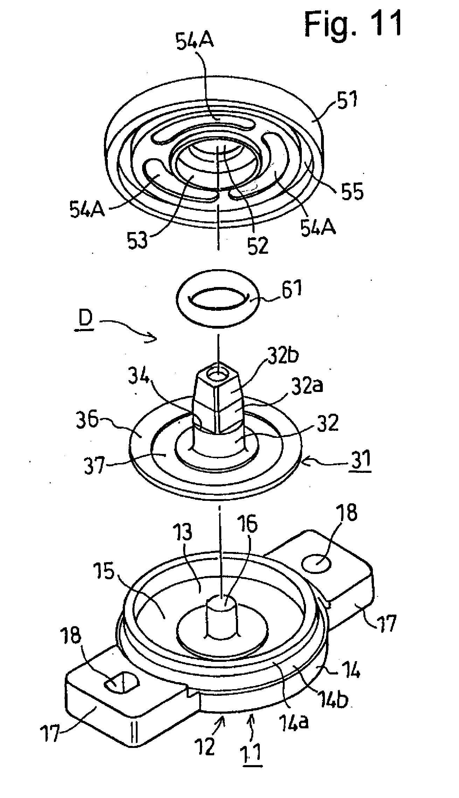

Fig. 11 is an exploded perspective view showing the rotary damper of the third embodiment of this invention, the same symbols are assigned to the same or similar parts as in Figs. 1-10, and their explanation is omitted.

Also, the parts omitted in illustration are constituted in the same manner as in the first embodiment.

In Fig. 11, on the cap 51, plural, for example, three divided arc-shaped grooves 54A are provided as divided air stopping members constituting an air stopping member, on concentric circles centered on the center of the pass-through hole 52, on the outside of the ring-shape step part 53 on the lower-side and the inside of the coupling recessed groove 55.

Also, because the method of assembly of the rotary damper D is the same as the first embodiment, the explanation is omitted.

By this embodiment, because a plurality of divided arc-shaped grooves 54A are provided on the inner face of the cap 51 constituting the housing facing the resistance member 36, the air incorporated into the housing during assembly can be stopped in the plurality of divided arc-shaped grooves 54A.

Accordingly, even though the rotor 31 rotates in both directions, the air stopped in the plural divided arc-shaped grooves 54A moves inside the divided arc-shaped grooves 54A in a state being not excessively compressed, and therefore the generation of a peculiar sound due to the air incorporated into the housing can be prevented.

Also, when the rotary damper D is attached with the side of the cap 51 up, because the plural divided arc-shaped grooves 54A are provided on the inner face of the cap 51 positioned on the upper side, the air incorporated into the housing during assembly can be stopped assuredly in the plural divided arc-shaped grooves 54A, and therefore the generation of a peculiar sound due to the air incorporated into the housing can be prevented assuredly.

Also, because the encircling groove 37 is provided on the resistance member 36, the air can be stopped also in this encircling groove 37, and therefore even in the case when more air than the expected quantity of air is incorporated into the housing during assembly, the generation of a peculiar sound due to the air incorporated into the housing can be prevented assuredly.

Furthermore, it becomes that the air does not move to the outside of the divided arc-shaped grooves 54A, and therefore irregularity of generated torque can be reduced.

Furthermore, because the encircling groove 37 corresponding to the plurality of divided arc-shaped grooves 54A is provided on the resistance member, the air incorporated into the housing during assembly can be made to move from one divided arc-shaped groove 54A to another divided arc-shaped groove 54A via the encircling groove 37 in a state being not excessively compressed.

Accordingly, even though the rotor 31 rotates in both directions, because the air stopped in the divided arc-shaped grooves 54A moves from one divided arc-shaped groove 54A to another divided arc-shaped groove 54A via the encircling groove 37 in a state being not excessively compressed, the generation of a peculiar sound due to the air incorporated into the housing can be prevented.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

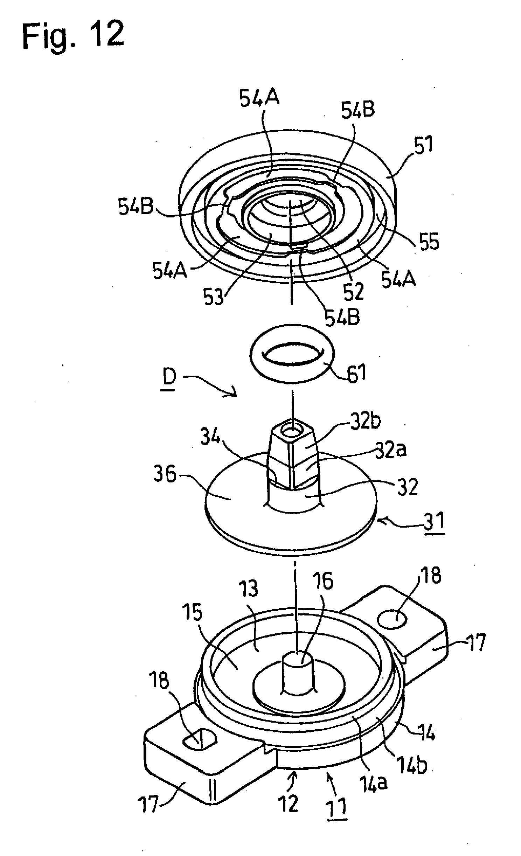

Fig. 12 is an exploded perspective view showing the rotary damper of the fourth embodiment of this invention, the same symbols are assigned to the same or similar parts as in Figs. 1-11, and their explanation is omitted.

Also, the parts omitted in illustration are constituted in the same manner as in the first embodiment.

In Fig. 12, on the cap 51, plural, for example, three divided arc-shaped grooves 54A are provided on concentric circles centered on the center of the pass-through hole 52, on the outside of the ring-shape step part 53 on the lower-side and the inside of the coupling recessed groove 55, and passages for air movement 54B connecting divided arc-shaped grooves 54A adjacent to each other in the circumferential direction are provided concentrically with these divided arc-shaped grooves 54A.

Also, the passages for air movement 54B are the same depth as the divided arc-shaped grooves 54A and the width is made narrower than the divided arc-shaped grooves 54A, but they may be the same width as the divided arc-shaped grooves 54A and shallower than the divided arc-shaped grooves 54A.

Also, because the method of assembly of the rotary damper D is the same as the first embodiment, the explanation is omitted.

By this embodiment, because three divided arc-shaped grooves 54A positioned on the circumference are provided on the inner face of the cap 51 constituting the housing facing the resistance member 36, the air incorporated into the housing during assembly can be made to move to these three divided arc-shaped grooves 54A via the passages for air movement 54B in a state being not excessively compressed.

Accordingly, even though the rotor 31 rotates in both directions, the air stopped in the divided arc-shaped grooves 54A moves inside the divided arc-shaped grooves 54A in a state being not excessively compressed, and therefore the generation of a peculiar sound due to the air incorporated into the housing can be prevented.

Also, when the rotary damper D is attached with the side of the cap 51 up, because the plurality of divided arc-shaped grooves 54A and the passages for air movement 54B are provided on the inner face of the cap 51 positioned on the upper side, the air incorporated into the housing during assembly can be stopped assuredly in the plural arc-shaped grooves 54A, and therefore the generation of a peculiar sound due to the air incorporated into the housing can be prevented assuredly.

Furthermore, because the three divided arc-shaped grooves 54 are connected by the passages for air movement 54B, the air incorporated into the housing during assembly can be made to move from one divided arc-shaped groove 54A to another divided arc-shaped groove 54A via the passages for air movement 54B in a state being not excessively compressed.

Accordingly, even though the rotor 31 rotates in both directions, because the air stopped in the divided arc-shaped grooves 54A moves from one divided arc-shaped groove 54A to another divided arc-shaped groove 54A via the passages for air movement 54B in a state being not excessively compressed, the generation of a peculiar sound due to the air incorporated into the housing can be prevented.

Furthermore, it becomes that the air does not move to the outside of the divided arc-shaped grooves 54A and the passages for air movement 54B, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

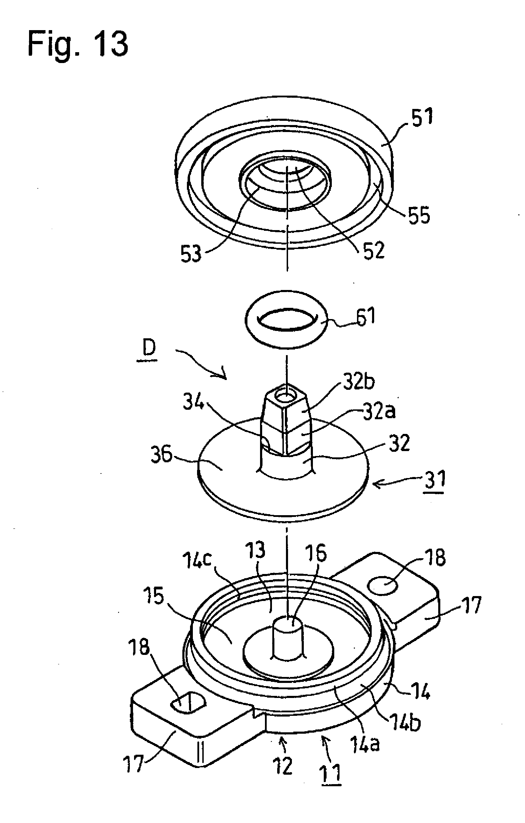

Fig. 13 is an exploded perspective view showing the rotary damper of the fifth embodiment of this invention, the same symbols are assigned to the same or similar parts as in Figs. 1-12, and their explanation is omitted.

Also, the parts omitted in illustration are constituted in the same manner as in the first embodiment.

In Fig. 13, a circumferential groove 14c is provided as an air stopping member on the inner face of the cylindrical wall part 14.

Also, because the method of assembly of the rotary damper D is the same as the first embodiment, the explanation is omitted.

By this embodiment, because a circumferential groove 14c is provided on the inner face of the cylindrical wall part 14 of the case 11 constituting the housing facing the resistance member 36, the air incorporated into the housing during assembly can be stopped in this circumferential groove 14c.

Accordingly, even though the rotor 31 rotates in both directions, the air stopped in the circumferential groove 14c moves inside the circumferential groove 14c in a state being not excessively compressed, and therefore the generation of a peculiar sound due to the air incorporated into the housing can be prevented.

Also, when the rotary damper D is attached in the vertical direction with the case 11 and the cap 51 to the left and right, because the circumferential groove 14c is provided on the inner face of the cylindrical wall part 14 positioned on the upper side, the air incorporated into the housing during assembly can be stopped assuredly in the circumferential groove 14c, and therefore the generation of a peculiar sound due to the air incorporated into the housing can be prevented assuredly.

Furthermore, it becomes that the air does not move to the outside of the circumferential groove 14c, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

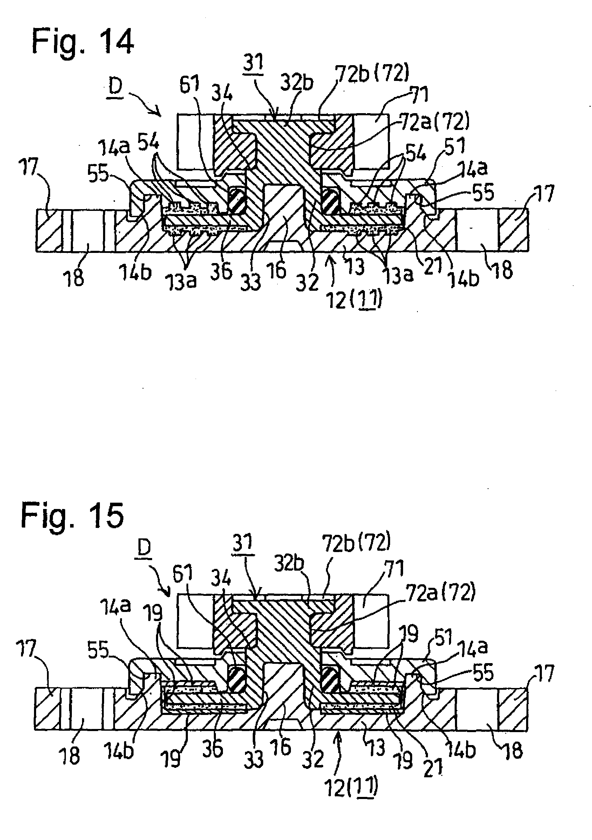

Fig. 14 is a sectional view showing the rotary damper of the sixth embodiment of this invention, the same symbols are assigned to the same or similar parts as in Figs. 1-13, and their explanation is omitted.

In Fig. 14, on the inside bottom face of the bottom part 13, plural, for example, three circumferential grooves 13a are provided respectively on concentric circles centered on the center of the shaft bearing part 16 as air stopping members.

Also, on the cap 51, plural, for example, three circumferential grooves 54 are provided as air stopping members, on concentric circles centered on the center of the pass-through hole 52, on the outside of the ring-shape step part 53 on the lower-side and the inside of the coupling recessed groove 55.

Also, because the method of assembly of the rotary damper D is the same as the first embodiment, the explanation is omitted.

By this embodiment, because circumferential grooves 13a are provided on the inner face of the bottom part 13 of the case 11 constituting the housing facing the resistance member 36, and circumferential grooves are provided on the inner face of the cap 51 constituting the housing facing the resistance member 36, the air incorporated into the housing during assembly can be stopped in these circumferential grooves 13a, 54.

Accordingly, even though the rotor 31 rotates in both directions, the air stopped in the circumferential grooves 13a, 54 moves inside the circumferential grooves 13a, 54 in a state being not excessively compressed, and therefore the generation of a peculiar sound due to the air incorporated into the housing can be prevented.

Furthermore, it becomes that the air does not move to the outside of the circumferential grooves 13a, 54, and therefore irregularity of generated torque can be reduced.

Furthermore, because the circumferential grooves 13a, 54 were made plural, even in the case when more air than the expected quantity of air is incorporated into the housing during assembly, the generation of a peculiar sound due to the air incorporated into the housing can be prevented assuredly.

Also, when the rotary damper D is attached with the side of the cap 51 up, because the circumferential grooves 54 are provided on the inner face of the cap 51 positioned on the upper side, the air incorporated into the housing during assembly can be stopped assuredly in the circumferential grooves 54, and therefore the generation of a peculiar sound due to the air incorporated into the housing can be prevented assuredly.

Also, when the rotary damper D is attached with the side of the case 11 up, because the circumferential grooves 13a are provided on the inner face of the bottom part 13 positioned on the upper side, the air incorporated into the housing during assembly can be stopped assuredly in the circumferential grooves 13a, and therefore the generation of a peculiar sound due to the air incorporated into the housing can be prevented assuredly.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

Fig. 15 is a sectional view showing the rotary damper of the seventh embodiment of this invention, the same symbols are assigned to the same or similar parts as in Figs. 1-14, and their explanation is omitted.

In Fig. 15, foamed soft material 19, for example such as foamed urethane, is attached by two-color molding as an air stopping member on the inner faces facing the resistance member 36 of the bottom part 13, cylindrical wall part 14, and cap 52.

Also, because the method of assembly of the rotary damper D becomes the same as the first embodiment, the explanation is omitted.

By this embodiment, because foamed soft material 19 is provided on the inner faces of the bottom part 13 and cylindrical wall part 14 of the case 11 constituting the housing facing the resistance member 36, and foamed soft material 19 is provided on the inner face of the cap 51 constituting the housing facing the resistance member 36, the air incorporated into the housing during assembly can be stopped in this foamed soft material 19.

Accordingly, even though the rotor 31 rotates in both directions, the air inside the foamed soft material 19 is not excessively compressed, and therefore the generation of a peculiar sound due to the air incorporated into the housing can be prevented.

Furthermore, it becomes that the air does not move to the outside of the foamed soft material 19, and therefore irregularity of generated torque can be reduced.

Also, when the rotary damper D is attached with the side of the cap 51 up, because the foamed soft material 19 is provided on the inner face of the cap 51 positioned on the upper side, the air incorporated into the housing during assembly can be stopped assuredly in the foamed soft material 19, and therefore the generation of a peculiar sound due to the air incorporated into the housing can be prevented assuredly.

Also, when the rotary damper D is attached with the side of the case 11 up, because the foamed soft material 19 is provided on the inner face of the bottom part 13 positioned on the upper side, the air incorporated into the housing during assembly can be stopped assuredly in the foamed soft material 19, and therefore the generation of a peculiar sound due to the air incorporated into the housing can be prevented assuredly.

Also, when the rotary damper D is attached in the vertical direction with the case 11 and the cap 51 to the left and right, because the foamed soft material 19 is provided on the inner face of the cylindrical wall part 14 positioned on the upper side, the air incorporated into the housing during assembly can be stopped assuredly in the foamed soft material 19, and therefore the generation of a peculiar sound due to the air incorporated into the housing can be prevented assuredly.

In Fig. 15, the foamed soft material 19 is attached on all of the inner faces of the bottom part 13, cylindrical wall part 14, and cap 51, but it also may be attached to any one place or two places of the bottom part 13, cylindrical wall part 14, and cap 51, also, the method of attachment of the foamed soft material 19 is not limited to two-color molding, and it also may be attachment with adhesive material, and attachment by coupling to the bottom part 13, cylindrical wall part 14, and cap 51.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

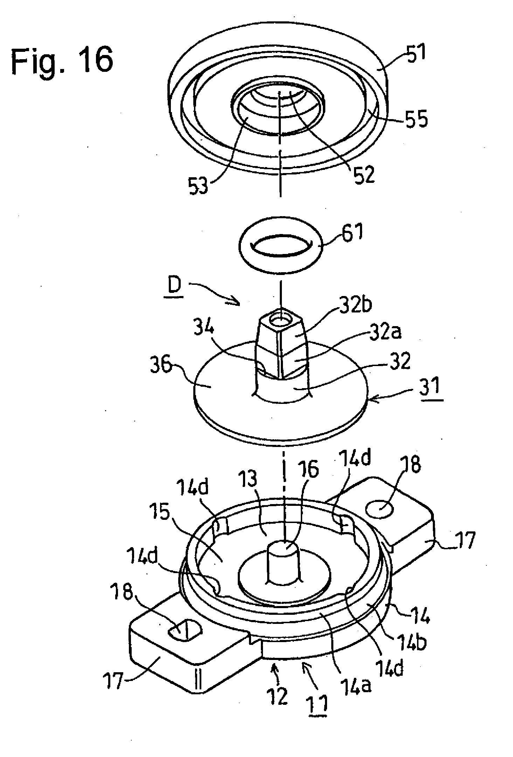

Fig. 16 is an exploded perspective view showing the rotary damper of the eighth embodiment of this invention, the same symbols are assigned to the same or similar parts as in Figs. 1-15, and their explanation is omitted.

Also, the parts omitted in illustration are constituted in the same manner as in the first embodiment.

In Fig. 16, grooves 14d extending in the direction of the shaft are provided as air stopping members on the inner faces of the cylindrical wall part 4 and the thin protruding cylindrical part 14a, for example, in positions having divided a center square into four even parts.

Also, because the method of assembly of the rotary damper D is the same as the first embodiment, the explanation is omitted.

By this embodiment, because grooves 14d are provided on the inner face of the cylindrical wall part 14 and the inner face of the thin protruding cylindrical part 14a continuing on the cylindrical wall part 14 of the case 11 constituting the housing facing the resistance member 36, the air incorporated into the housing during assembly can be stopped in these grooves 14d.

Accordingly, even though the rotor 31 rotates in both directions, the air stopped in the grooves 14d moves inside the grooves 14d in a state being not excessively compressed, and therefore the generation of a peculiar sound due to the air incorporated into the housing can be prevented.

Also, when the rotary damper D is attached in the vertical direction with the case 11 and the cap 51 to the left and right, because the grooves 14d are provided on the inner faces of the cylindrical wall part 14 and the thin protruding cylindrical part 14a positioned on the upper side, the air incorporated into the housing during assembly can be stopped assuredly in the grooves 14d, and therefore the generation of a peculiar sound due to the air incorporated into the housing can be prevented assuredly.

Furthermore, it becomes that the air does not move to the outside of the grooves 14d, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

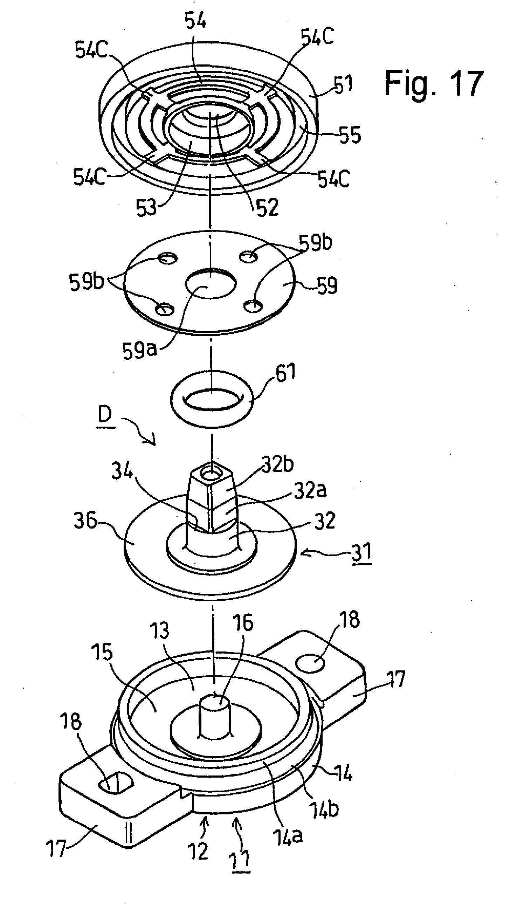

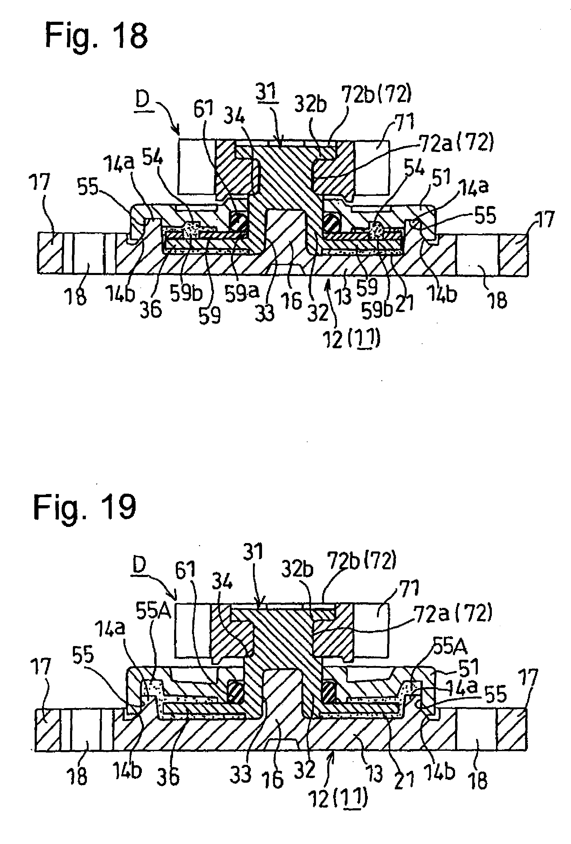

Fig. 17 is an exploded perspective view showing the rotary damper of the ninth embodiment of this invention, Fig. 18 is a sectional view showing the rotary damper of the ninth embodiment of this invention, the same symbols are assigned to the same or similar parts as in Figs. 1-16, and their explanation is omitted.

In Fig. 17, on the cap 51, a circumferential groove 54 is provided on a concentric circle centered on the center of the pass-through hole 52, on the outside of the ring-shape step part 53 on the lower-side and the inside of the coupling recessed groove 55, and radiating grooves 54C, for example, four, connecting with the circumferential groove 54 and dividing it in equal lengths in the circumferential direction, are provided as air stopping members.

Also, the circumferential groove 54 functions also as a passage for air movement.

59 indicates a spacer inserted between the resistance member 36 and the cap 51, and in the center there is provided a pass-through hole 59a through which the shaft member 32 is inserted, and on a concentric circle with the circumferential groove 54 centered on the center of this pass-through hole 59a, there are provided air guide holes 59b, for example, four at equal intervals having the width of the circumferential groove 54 as diameter.

Difference between the method of assembly of this embodiment and the method of assembly of the first embodiment is that, for example, before the cap 51 is attached to the case 11 and the opening of the case 11 is closed, for example, the shaft member 32 is inserted through the pass-through hole 59a of the spacer 59 having silicon oil 21 applied on both faces, and the spacer 59 is positioned on the upper side of the resistance member 36.

Also, because the other parts of the method of assembly of the rotary damper D is the same as the first embodiment, the explanation is omitted.

By this embodiment, because the circumferential groove 54 and the radiating grooves 54C are provided on the outside of the cap 51 constituting the housing facing the resistance member 36, the air incorporated into the housing during assembly can be stopped in these circumferential groove 54 and radiating grooves 54C via the air guide holes 59b of the spacer 59.

Accordingly, even though the rotor 31 rotates in both directions, the air inside the circumferential groove 54 and the radiating grooves 54C moves inside the circumferential groove 54 in a state being not excessively compressed, and therefore the generation of a peculiar sound due to the air incorporated into the housing can be prevented.

Also, when the rotary damper D is attached with the side of the cap 51 up, because the circumferential groove 54 and the radiating grooves 54C are provided on the inner face of the cap 51 positioned on the upper side, the air incorporated into the housing during assembly can be stopped assuredly in the circumferential groove 54 and the radiating grooves 54C, and therefore the generation of a peculiar sound due to the air incorporated into the housing can be prevented assuredly.

Furthermore, it becomes that the air can be stopped in the circumferential groove 54 and the radiating grooves 54C via the air guide holes 59b, and that the air is partitioned from the resistance member 36 by the spacer 59, and therefore irregularity of generated torque can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

Fig. 19 is a sectional view showing the rotary damper of the tenth embodiment of this invention, the same symbols are assigned to the same or similar parts as in Figs. 1-18, and their explanation is omitted.

In Fig. 19, an encircling recessed part 55A as an air stopping member is provided on the upper part of the coupling recessed groove 55 of the cap 51 in a state connecting to the housing part 15.

Also, the inner face facing the resistance member 36 of the cap 51 is raised on a conical inclined surface from the inside to the outside in the radial direction, that is, toward the encircling recessed part 55A.

Also, because the method of assembly of the rotary damper D is the same as the first embodiment, the explanation is omitted.

By this embodiment, because an encircling recessed part 55A is provided on the outside of the cap 51 constituting the housing facing the resistance member 36, the air incorporated into the housing during assembly can be stopped in this encircling recessed part 55A.

Accordingly, even though the rotor 31 rotates in both directions, the air inside the encircling recessed part 55A is not excessively compressed, and therefore the generation of a peculiar sound due to the air incorporated into the housing can be prevented.

Also, because the inner face of the cap 51 is made as an inclined face rising toward the encircling recessed part 55A, the air incorporated into the housing during assembly can be guided to the encircling recessed part 55A and stopped assuredly in the encircling recessed part 55A.

Also, when the rotary damper D is attached with the side of the cap 51 up, because the encircling recessed part 55A is provided on the inner face of the cap 51 positioned on the upper side, the air incorporated into the housing during assembly can be stopped assuredly in the encircling recessed part 55A, and therefore the generation of a peculiar sound due to the air incorporated into the housing can be prevented assuredly.

Furthermore, it becomes that the air does not move to the outside of the encircling recessed part 55A which is away from the faces facing the upper and lower faces or side faces of the resistance member 36, and therefore irregularity of generated torque can be reduced.

Also, because the encircling resistance member 55A is provided in a place that does not face the resistance member 36, the influence on the torque generated at the resistance member 36 can be reduced.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

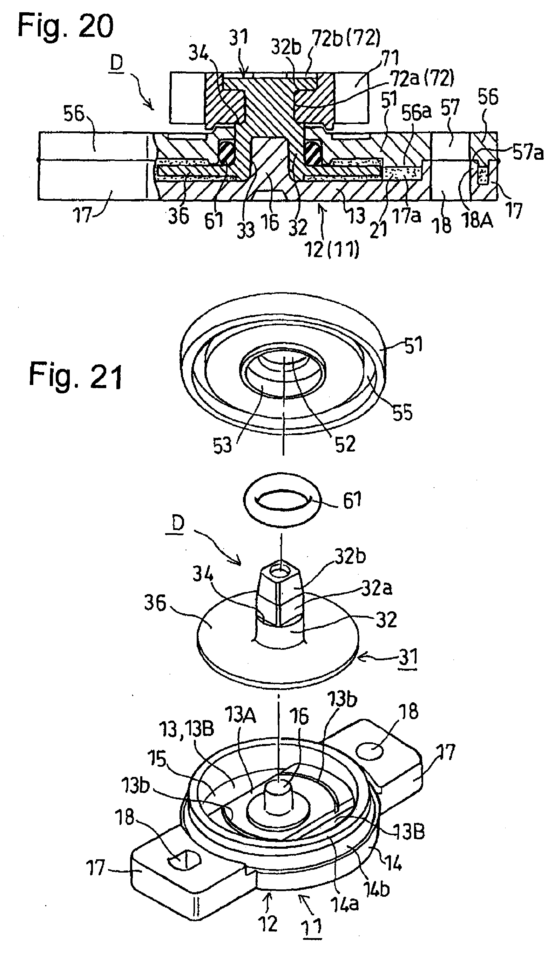

Fig. 20 is partial sectional view showing the rotary damper of the eleventh embodiment of this invention, the same symbols are assigned to the same or similar parts as in Figs. 1-19, and their explanation is omitted.

In Fig. 20, on the attachment flange 17, a recessed part 17a connecting to the housing part 15 is provided as an air storage part, and a hollow attachment boss 18A is integrally provided inside this recessed part 17a and an attachment hole 18 is provided.

Also, on the cap 51, an attachment flange 56 having a protruding step part 56a for coupling in the recessed part 17a is provided corresponding to the attachment flange 17, and on this attachment flange 56, an attachment hole 57 connected to the attachment boss 18A (attachment hole 18) is provided, and there is provided a coupling recessed part 57a for coupling with the attachment boss 18A centered on the center of the attachment hole 57 on the lower face.

Difference between the method of assembly of this embodiment and the method of assembly of the first embodiment is that after attaching the cap 51 to the case 11 and closing the opening of the case 11, the entire outer periphery of the case 11 including the outer periphery of the attachment flanges 17, 56 and the entire outer periphery of the cap 51 are welded by high-frequency welding.

Also, because the other parts of the method of assembly of the rotary damper D are the same as the first embodiment, the explanation is omitted.

By this embodiment, because a recessed part 17a is provided on the attachment flange 17 of the case 11 constituting the housing facing the resistance member 36, the air incorporated into the housing during assembly can be stopped in this recessed part 17a.

Accordingly, even though the rotor 31 rotates in both directions, the air inside the recessed part 17a is not excessively compressed, and therefore the generation of a peculiar sound due to the air incorporated into the housing can be prevented.

Furthermore, it becomes that the air does not move to the outside of the recessed part 17a, and therefore irregularity of generated torque can be reduced.

Also, when the rotary damper D is attached in the vertical direction with the case 11 and the cap 51 to the left and right and the attachment flanges 17, 56 up and down, because the recessed part 17a is provided on the attachment flange 17 positioned on the upper side, the air incorporated into the housing during assembly can be stopped assuredly in the recessed part 17a, and therefore the generation of a peculiar sound due to the air incorporated into the housing can be prevented assuredly.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

Fig. 21 is an exploded perspective view showing the rotary damper of the twelfth embodiment of this invention, the same symbols are assigned to the same or similar parts as in Figs. 1-20, and their explanation is omitted.

Also, the parts omitted in illustration are constituted in the same manner as in the first embodiment.

In Fig. 21, on the bottom part 13, an I-cut-shaped protruding part 13A having a prescribed width is integrally provided in the diameter direction passing through the shaft bearing part 16, whereby recessed parts 13B which function as air storage parts are provided on both sides of this protruding part 13A, and there are provided arc-shaped passages for air movement 13b positioned on a circle centered on the center of the shaft bearing part 16, which connect the recessed parts 13B to the protruding part 13A.

Also, because the method of assembly of the rotary damper D is the same as the first embodiment, the explanation is omitted.

By this embodiment, because recessed parts 13B are provided on the bottom part 13 of the case 11 constituting the housing facing the resistance member 36, the air incorporated into the housing during assembly can be stopped in these recessed parts 13B.

Accordingly, even though the rotor 31 rotates in both directions, the air inside the recessed parts 13B is not excessively compressed, and therefore the generation of a peculiar sound due to the air incorporated into the housing can be prevented.

Also, when the rotary damper D is attached with the side of the case 11 up, because the recessed parts 13B are provided on the inner face of the bottom part 13 positioned on the upper side, the air incorporated into the housing during assembly can be stopped assuredly in the recessed parts 13B, and therefore the generation of a peculiar sound due to the air incorporated into the housing can be prevented assuredly.

Furthermore, it becomes that the air does not move to the outside of the recessed parts 13B, and therefore irregularity of generated torque can be reduced.

Furthermore, because the recessed parts 13B are connected by the passages for air movement 3b, the air incorporated into the housing during assembly can be made to move from one recessed part 13B to the other recessed part 13B via the passages for air movement 13b in a state being not excessively compressed.

Accordingly, even though the rotor 31 rotates in both directions, because the air stopped in the recessed parts 13B moves from one recessed part 13B to the other recessed part 13B via the passages for air movement 13b in a state being not excessively compressed, the generation of a peculiar sound due to the air incorporated into the housing can be prevented.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

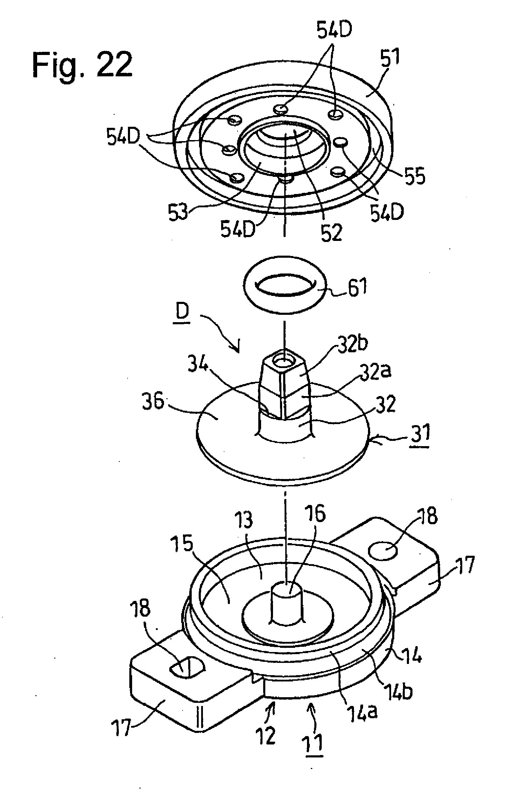

Fig. 22 is an exploded perspective view showing the rotary damper of the thirteenth embodiment of this invention, the same symbols are assigned to the same or similar parts as in Figs. 1-21, and their explanation is omitted.

Also, the parts omitted in illustration are constituted in the same manner as in the first embodiment.

In Fig. 22, on the cap 51, plural, for example four, recessed parts 54D at equal intervals in the circumferential direction on two concentric circles, centered on the center of the pass-through hole 52, on the outside of the ring-shape step part 53 on the lower-side and the inside of the coupling recessed groove 55, are respectively provided as air storage parts.

Also, the recessed parts 54D on the inner periphery are positioned between the recessed parts 54D on the outer periphery.

Also, because the method of assembly of the rotary damper D is the same as the first embodiment, the explanation is omitted.

By this embodiment, because plural recessed parts 54D are provided on the inner face of the cap 51 constituting the housing facing the resistance member 36, the air incorporated into the housing during assembly can be stopped in these plural recessed parts 54D.

Accordingly, even though the rotor 31 rotates in both directions, the air stopped in recessed parts 54D moves inside the recessed parts 54D in a state being not excessively compressed, and therefore the generation of a peculiar sound due to the air incorporated into the housing can be prevented.

Furthermore, it becomes that the air does not move to the outside of the recessed parts 54D, and therefore irregularity of generated torque can be reduced.

Also, when the rotary damper D is attached with the side of the cap 51 up, because the plural recessed parts 54D are provided on the inner face of the cap 51 positioned on the upper side, the air incorporated into the housing during assembly can be stopped assuredly in the plural recessed parts 54D, and therefore the generation of a peculiar sound due to the air incorporated into the housing can be prevented assuredly.

Also, in the case when molding the cap 51 by injection molding of synthetic resin, the recessed parts 54D in this embodiment can be formed utilizing the shape of the cylindrical extruded product when extruding the molded product from the mold.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

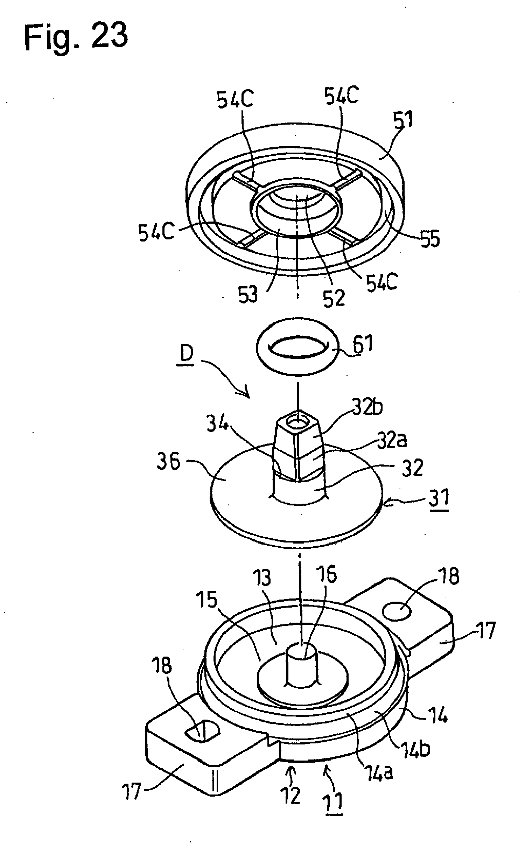

Fig. 23 is an exploded perspective view showing the rotary damper of the fourteenth embodiment of this invention, the same symbols are assigned to the same or similar parts as in Figs. 1-22, and their explanation is omitted.

Also, the parts omitted in illustration are constituted in the same manner as in the first embodiment.

In Fig. 23, on the cap 51, there are provided radial grooves 54C, for example, in positions dividing into four parts, extending radially from the outside of the ring-shape step part 53 on the lower-side to the inside of the coupling recessed groove 55 centered on the center of the pass-through hole 52.

Also, because the method of assembly of the rotary damper D is the same as the first embodiment, the explanation is omitted.

By this embodiment, because a radial grooves 54C are provided on the outside of the cap 51 constituting the housing facing the resistance member 36, the air incorporated into the housing during assembly can be stopped in these radial grooves 54C.

Accordingly, even though the rotor 31 rotates in both directions, the air inside the radial grooves 54C moves inside the radial grooves 54C in a state being not excessively compressed, and therefore the generation of a peculiar sound due to the air incorporated into the housing can be prevented.

Furthermore, it becomes that the air does not move to the outside of the radial grooves 54C, and therefore irregularity of generated torque can be reduced.

Also, when the rotary damper D is attached with the side of the cap 51 up, because radial grooves 54C are provided on the inner face of the cap 51 positioned on the upper side, the air incorporated into the housing during assembly can be stopped assuredly in the radial grooves 54C, and therefore the generation of a peculiar sound due to the air incorporated into the housing can be prevented assuredly.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

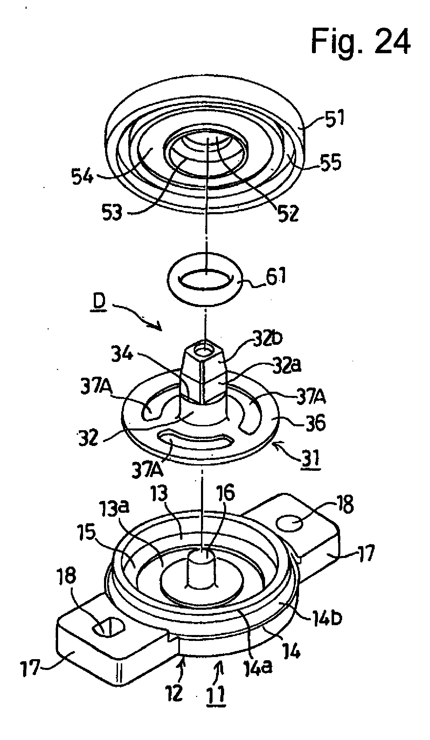

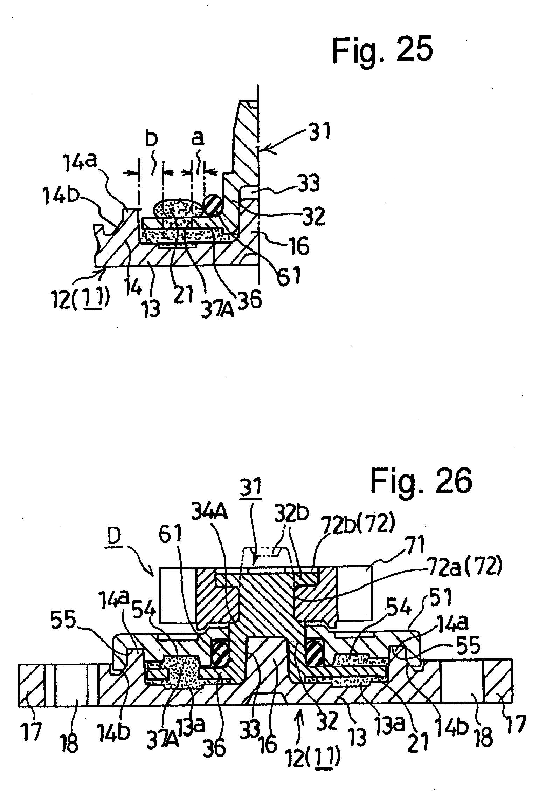

Fig. 24 is an exploded perspective view showing the rotary damper of the fifteenth embodiment of this invention, Fig. 25 is a drawing for explaining the process of assembling the rotary damper shown in Fig. 24, Fig. 26 is a sectional view showing the rotary damper of the fifteenth embodiment of this invention, the same symbols are assigned to the same or similar parts as in Figs. 1-23, and their explanation is omitted.

In Fig. 24, on the resistance member 36 of the rotor 31, plural, for example, three arc-shaped pass-through holes 37A are provided as air stopping members on a concentric circle centered on the center of the shaft member 32.

Also, as shown in Fig. 26, it is constituted such that the widths of the circumferential grooves 13a, 54 are wider than the widths of the arc-shaped pass-through holes 37A, and the arc-shaped pass-through holes 37A are positioned on the inside of the circumferential grooves 13a, 54.

The circumferential grooves 13a, 54 (recessed grooves) in this embodiment function as passages for air movement.

Difference between the method of assembly of this embodiment and the method of assembly of the first embodiment is that, as shown in Fig. 25, when a part of the shaft member 32 and the resistance member 36 are housed inside the housing part 15 so as to cause the shaft bearing part 16 of the case 11 to couple inside the concavity 33, the silicon oil 21 pressed by the resistance member 36 and floating up from the arc-shaped pass-through holes 37A enters in between the 0-ring 61 and the resistance member 36 and the shaft member 32 by a capillary phenomenon because the distance *a* between the inner periphery of the arc-shaped pass-through holes 37A and the 0-ring 61 is shorter than the distance b between the outer periphery of the arc-shaped pass-through holes 37A and the thin protruding cylindrical part 14a, and therefore it prevents the 0-ring 61 from sticking to the resistance member 36 and the shaft member 32, and it does not overflow to the outside from the thin protruding cylindrical part 14a.

Also, because the other parts of the method of assembly of the rotary damper D are the same as the first embodiment, the explanation is omitted.

By this embodiment, because plural arc-shaped pass-through holes 37A are provided on the resistance member 36, and circumferential grooves 13a, 54 connecting these arc-shaped pass-through holes 37A are provided on the housing, the air incorporated into the housing during assembly can be made to move from one arc-shaped pass-through hole 37A to another arc-shaped pass-through hole 37A via the circumferential grooves 13a, 54 in a state being not excessively compressed.

Accordingly, even though the rotor 31 rotates in both directions, because the air stopped in the arc-shaped pass-through holes 37A moves from one arc-shaped pass-through hole 37A to another arc-shaped pass-through hole 37A via the circumferential grooves 13a, 54 in a state being not excessively compressed, the generation of a peculiar sound due to the air incorporated into the housing can be prevented.

Because the distance *a* between the inner periphery of the arc-shaped pass-through holes 37A and the 0-ring is made shorter than the distance b between the outer periphery of the arc-shaped pass-through holes 37A and the thin protruding cylindrical part 14a, the silicon oil 21 enters in between the 0-ring 61 and the resistance member 36 and the shaft member 32 by a capillary action during assembly, whereby it prevents the 0-ring 61 from sticking to the resistance member 36 and the shaft member 32, and the silicon oil 21 does not overflow to the outside from the thin protruding cylindrical part 14a.

Accordingly, by the fact that the silicon oil 21 enters in between the 0-ring 61 and the resistance member 36 and the shaft member 32, and it can prevent the 0-ring 61 from sticking to the resistance member 36 and the shaft member 32, an increase of initial torque of the rotary damper D can be prevented, also, by the fact that the silicon oil 21 does not overflow to the outside from the thin protruding cylindrical part 14a, the cap 51 can be welded assuredly to the case and the outer periphery of the housing can be sealed.

Also, when welding the cap 51 to the case 11, because the upper end of the thin protruding cylindrical part 14a is made to function as a stopper, the height from the bottom part 13 to the cap 51 can be set uniformly, whereby the distance from the resistance member 36 to the bottom part 13 and the cap 51 can be kept constant, and irregularity of torque can be suppressed.

In the above-mentioned first embodiment, the same kind of effect can be obtained even without providing the encircling groove 37.

Also, in the third embodiment, the same kind of effect can be obtained even when constituting it without providing an encircling groove 37, or constituting it by providing the same kind of divided arc-shaped grooves as the divided arc-shaped grooves 54A on the bottom part 13, or constituting it by providing the same kind of divided arc-shaped grooves as the divided arc-shaped grooves 54A only on the bottom part 13.

Also, in the fourth embodiment, the same kind of effect can be obtained even when constituting it by providing the same kinds of divided arc-shaped grooves and passages for air movement as the divided arc-shaped grooves 54A and the passages for air movement 54B on the bottom part 13, or constituting it by providing the same kinds of divided arc-shaped grooves and passages for air movement as the divided arc-shaped grooves 54A and the passages for air movement 54B only on the bottom part 13.

Also, in the fifth embodiment, the same kind of effect can be obtained even when constituting it by providing plural divided air stopping members by dividing the circumferential groove 14c into plural parts, or constituting it by providing plural divided air stopping members by dividing the circumferential groove 14c into plural parts, and also providing passages for air movement to connect the divided air stopping members.

Also, in the seventh embodiment, the same kind of effect can be obtained even when constituting it by providing foamed soft material 19 on at least one of the bottom part 13, cylindrical wall part 14 and cap 51 facing the resistance member 36.

Also, in the eighth embodiment, the same kind of effect can be obtained even when constituting it by providing passages for air movement to connect the grooves 14d.

Furthermore, the same kind of effect can be obtained even when constituting it by combining the air stopping members of each embodiment.

Also, in the fifteenth embodiment, the same kind of effect can be obtained even when constituting it by providing recessed parts, recessed grooves, encircling grooves, and circumferential grooves in place of the arc-shaped pass-through holes 37A on the resistance member 36, or without providing the circumferential groove 13a and/or the circumferential groove 54.

In the above-mentioned embodiments, examples are shown in which the rotor 31 was supported to be capable of rotation by providing the shaft bearing part 16 on the case 11 and providing a concavity 33 on the shaft member 32, but it also may be constituted providing the concavity on the case and providing the shaft bearing part on the shaft.

Also, examples are shown in which the resistance member 36 is integrally molded on the shaft member 32, but it also may be constituted separately molding the shaft member and the resistance member, and, for example, making it such that they rotate as one body by a relationship between a square shaft and a square hole.

Also, examples are shown in which silicon oil 21 is used as the viscous fluid, but another viscous fluid that functions in the same manner, for example, such as grease, also can be used.

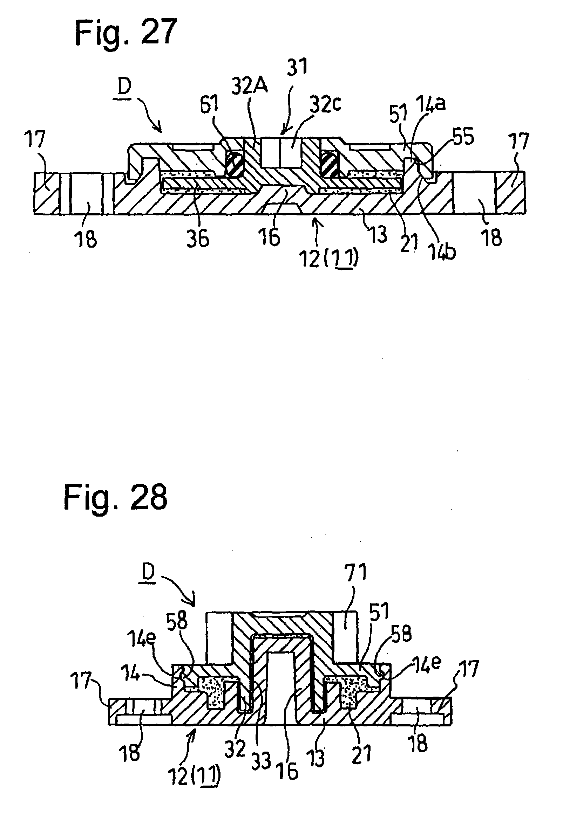

Each embodiment mentioned above is explained with examples in which the shaft member 32 protrudes out from the housing, but as shown in Fig. 27, this invention can be adapted also to a rotary damper D constituted by attaching a driving gear on the exposed part of a shaft member 32A (output member) having at least a part exposed from the housing and providing a coupling part 32c that is capable of rotating as one body.

Also, each embodiment mentioned above is explained with examples in which an O-ring 61 for preventing leakage of the silicon oil 21 from between the shaft member 32 and the housing is provided, but as shown in Fig. 28, this invention can be adapted also to a rotary damper D constituted by providing a rotation guide groove 14e encircling the inner periphery of the cylindrical wall part 14, and providing a coupling protrusion 58 to rotate in coupling to this rotation guide groove 14e having it encircle the outer periphery of the cap 51, whereby leakage of the silicon oil 21 from between the case 11 and the cap 51 is prevented even without using an 0-ring (seal member).

### Utility in the Industry

As stated above, the rotary damper pertaining to this invention can be used in all kinds of machinery as those which damp the rotation of rotating bodies or as those which damp the movement of a linearly moving body, and the generation of a peculiar sound due to air incorporated into the housing during assembly can be prevented.

## Claims

1. A rotary damper, comprising:
a housing,
a viscous fluid housed inside the housing, and
a rotor housed inside the housing and having a resistance member, provided on an output member at least partially exposed to an outside of said housing, for moving through said viscous fluid inside the housing,
wherein an air stopping member is provided on an inner face of said housing or on the resistance member.

2. The rotary damper according to claim 1, wherein said air stopping member is provided on the inner face positioned on an upper side of said housing in an attached state.

3. The rotary damper according to claim 1 or claim 2, wherein
said air stopping member comprises a plurality of divided air stopping members positioned on a circumference, and
said divided air stopping members adjacent to each other in a circumferential direction are connected by a passage for air movement.

4. The rotary damper according to claim 1 or claim 2, wherein the air stopping member of said housing is arranged at a position not to face said resistance member.

5. The rotary damper according to claim 1 or claim 2, wherein a spacer is provided for partitioning between the air stopping member of said housing and said resistance member.

6. The rotary damper according to claim 1 or claim 2, wherein the air stopping member of said housing is provided at a portion other than a portion corresponding to a vicinity of an outermost periphery part of said resistance member.

7. The rotary damper according to claim 3, wherein
said plurality of divided air stopping members of said resistance member comprises pass-through holes, and
said passages for air movement connecting said pass-through holes comprise recessed grooves provided on said housing.

8. The rotary damper according to claim 7, wherein
said pass-through holes are provided concentrically, and
said recessed grooves are circumferential grooves provided on said housing corresponding to said pass-through holes.
